# EUROPÄISCHE PATENTSCHRIFT

(11) **EP 2 422 271 B1**
(45) Veröffentlichungstag und Bekanntmachung des Hinweises auf die Patenterteilung: **19.06.2013**
(21) Anmeldenummer: 10720342.4
(22) Anmeldetag: 20.04.2010
(51) Int. Cl.: G06F 11/10, G05B 19/042

(54) **VERFAHREN UND VORRICHTUNG ZUM ERSTELLEN EINES ANWENDERPROGRAMMS FÜR EINE SICHERHEITSSTEUERUNG**
METHOD AND APPARATUS FOR CREATING AN APPLICATION PROGRAM FOR A SAFETY-RELATED CONTROL UNIT
PROCÉDÉ ET DISPOSITIF D'ÉTABLISSEMENT D'UN PROGRAMME UTILISATEUR POUR UNE COMMANDE DE SÉCURITÉ

(30) Priorität: 20.04.2009 DE 102009019089
(43) Veröffentlichungstag der Anmeldung: 29.02.2012
(73) Patentinhaber: Pilz GmbH & Co. KG, 73760 Ostfildern (DE)
(72) Erfinder: MOOSMANN, Peter, 73760 Ostfildern (DE); REUSCH, Matthias, 72531 Hohenstein (DE)
(74) Vertreter: Witte, Weller & Partner
(86) Internationale Anmeldenummer: PCT/EP2010/002435
(87) Internationale Veröffentlichungsnummer: WO 2010/121795

(56) Entgegenhaltungen:
- WO-A1-88/09590
- WO-A2-02/067065
- US-A- 5 598 530

## Beschreibung

Die vorliegende Erfindung betrifft ein Verfahren und eine Vorrichtung zum Erstellen eines Anwenderprogramms für eine Sicherheitssteuerung, die dazu ausgebildet ist, eine automatisierte Anlage mit einer Vielzahl von Sensoren und einer Vielzahl von Aktuatoren zu steuern, wobei die Sicherheitssteuerung einen ersten Prozessor und einen zweiten Prozessor aufweist, wobei ein Quellcode für ein Anwenderprogramm erstellt wird, wobei der Quellcode eine Anzahl von Steueranweisungen zum Steuern der Aktuatoren umfasst, und wobei zur Bearbeitung der Steueranweisungen sicherheitsrelevante Programmvariablen mit Hilfe des ersten und zweiten Prozessors fehlersicher verarbeitet werden, wobei ferner ein Maschinencode in Abhängigkeit des Quellcodes erzeugt wird, und wobei zumindest eine Prüfsumme für zumindest einen Teil des Maschinencodes ermittelt wird.

Ein solches Verfahren und eine entsprechende Vorrichtung sind aus WO 02/067065 A2 bekannt.

Eine Sicherheitssteuerung im Sinne der vorliegenden Erfindung ist ein Gerät, oder eine Vorrichtung, das bzw. die von Sensoren gelieferte Eingangssignale aufnimmt und daraus durch logische Verknüpfungen und eventuell weitere Signal- oder Datenverarbeitungsschritte Ausgangssignale erzeugt. Die Ausgangssignale können dann Aktuatoren zugeführt werden, die in Abhängigkeit von den Eingangssignalen Aktionen oder Reaktionen in einer gesteuerten Anlage bewirken.

Ein bevorzugtes Anwendungsgebiet für derartige Sicherheitssteuerungen ist die Überwachung von Not-Aus-Tastern, Zwei-Hand-Steuerungen, Schutztüren oder Lichtgittern im Bereich der Maschinensicherheit. Derartige Sensoren werden verwendet, um beispielsweise eine Maschine, von der im Betrieb eine Gefahr für Menschen oder materielle Güter ausgeht, abzusichern. Beim Öffnen der Schutztür oder beim Betätigen des Not-Aus-Tasters wird jeweils ein Signal erzeugt, das der Sicherheitssteuerung als Eingangssignal zugeführt ist. In Reaktion darauf schaltet die Sicherheitssteuerung dann beispielsweise mit Hilfe eines Aktuators den gefahrbringenden Teil der Maschine ab.

Charakteristisch an einer Sicherheitssteuerung ist im Gegensatz zu einer "normalen" Steuerung, dass die Sicherheitssteuerung selbst dann, wenn bei ihr oder einem mit ihr verbundenen Gerät eine Fehlfunktion auftritt, stets einen sicheren Zustand der gefahrbringenden Anlagen oder Maschinen gewährleistet. Daher werden bei Sicherheitssteuerungen extrem hohe Anforderungen an die eigene Fehlersicherheit gestellt, was einen erheblichen Aufwand bei der Entwicklung und Herstellung zur Folge hat.

In der Regel benötigen Sicherheitssteuerungen vor ihrer Verwendung eine besondere Zulassung durch zuständige Aufsichtsbehörden, wie beispielsweise in Deutschland durch die Berufsgenossenschaften oder den TÜV. Die Sicherheitssteuerung muss dabei vorgegebene Sicherheitsstandards einhalten, die beispielsweise in der europäischen Norm EN 954-1 oder einer vergleichbaren Norm, beispielsweise der Norm IEC 61508 oder der Norm EN ISO 13849-1, niedergelegt sind. Im Folgenden wird daher unter einer Sicherheitssteuerung ein Gerät bzw. eine Vorrichtung verstanden, die zumindest die Sicherheitskategorie 3 der genannten europäischen Norm EN 954-1 erfüllt oder deren Safety Integrity Level (SIL) zumindest die Stufe 2 gemäß der genannten Norm IEC 61508 erreicht.

Eine programmierbare Sicherheitssteuerung bietet dem Anwender die Möglichkeit, die logischen Verknüpfungen und gegebenenfalls weitere Signal- oder Datenverarbeitungsschritte mit Hilfe einer Software, dem so genannten Anwenderprogramm, seinen Bedürfnissen entsprechend individuell festzulegen. Daraus resultiert eine große Flexibilität im Vergleich zu früheren Lösungen, bei denen die logischen Verknüpfungen durch eine definierte Verdrahtung zwischen verschiedenen Sicherheitsbausteinen erzeugt wurden. Ein Anwenderprogramm kann beispielsweise mit Hilfe eines handelsüblichen Personalcomputers (PC) und unter Verwendung entsprechend eingerichteter Softwareprogramme erstellt werden.

Wie bereits erwähnt, benötigen Sicherheitssteuerungen vor ihrer Verwendung eine besondere Zulassung durch eine zuständige Aufsichtsbehörde. Bei solch einer Zulassung wird der sicherheitsrelevante Umfang des Anwenderprogramm verifiziert. Bei dem sicherheitsrelevanten Umfang des Anwenderprogramms handelt es sich um die Sicherheitsanweisungen, die für die von der Sicherheitssteuerung zu erledigenden Sicherheitsaufgaben erforderlich sind. Für das Bearbeiten der Sicherheitsanweisungen werden sicherheitsrelevante Programmvariablen fehlersicher verarbeitet. Nach erfolgter Verifikation wird für den sicherheitsrelevanten Umfang des Anwenderprogramms, insbesondere für den sicherheitsrelevanten Umfang des Maschinencodes eine Prüfsumme ermittelt, und dieser sicherheitsrelevante Umfang mit der Prüfsumme versiegelt. Anhand der Prüfsumme kann die Aufsichtsbehörde nach erfolgter Abnahme vorgenommene Änderungen an dem sicherheitsrelevanten Umfang des Anwenderprogramms erkennen. So können beispielsweise unzulässige Manipulationen an dem sicherheitsrelevanten Umfang eines Anwenderprogramms festgestellt werden.

Werden nach erfolgter Zulassung durch die Aufsichtsbehörde Änderungen an dem sicherheitsrelevanten Umfang eines bestehenden Anwenderprogramms vorgenommen, beispielsweise um die auf der gesteuerten Anlage ablaufende Anwendung zu optimieren, ist eine erneute Zulassung des abgeänderten Anwenderprogramms durch die Aufsichtsbehörde erforderlich. Da der sicherheitsrelevante Umfang eines Anwenderprogramms auch Diagnoseanweisungen umfasst, ist eine erneute Zulassung auch dann erforderlich, wenn nachträglich lediglich Änderungen an solchen Diagnoseanweisungen vorgenommen werden. Dabei ist es nicht unüblich, nach erfolgter Zulassung Änderungen an den Diagnoseanweisungen vorzunehmen. Beispielsweise ergeben sich erst aufgrund eines Testbetriebs der Anlage Erkenntnisse, die eine Anpassung der Diagnoseanweisungen erfordern. Da Diagnoseanweisungen an sich, im Gegensatz zu Sicherheitssteueranweisungen, nicht sicherheitsrelevant sind, ist es von Nachteil, wenn auch in dem Fall, dass nach einer bereits erfolgten Zulassung nachträglich lediglich Änderungen an den Diagnoseanweisungen vorgenommen werden, eine erneute Zulassung durch eine Aufsichtsbehörde erforderlich ist. Dies ist mit einem erhöhten Zeitaufwand und zusätzlichen Kosten verfunden. Zudem schränkt dies die Flexibilität bei der Projektierung einer zu steuernden Anlage und somit beim Erstellen eines Anwenderprogramms ein.

Die eingangs genannte WO 02/067065 A2 offenbart ein Verfahren zum Programmieren einer Sicherheitssteuerung, wobei logische Verknüpfungen zwischen Eingangssignalen der Sicherheitssteuerungen festgelegt und Verknüpfungsprodukte zu Ausgangssignalen der Sicherheitssteuerung zugeordnet werden. Das Festlegen der Verknüpfungen und das Zuordnen erfolgt anhand vordefinierter funktionsspezifischer Programmmodule, die aus einer Menge derartiger Programmmodule ausgewählt werden. Jedes ausgewählte Programmmodul wird eindeutig einer definierten Funktionsgruppe zugeordnet. Wenn der Programmierer sämtliche benötigten Programmmodule ausgewählt und parametriert hat, wird das vollständige Anwenderprogramm in einem Speicher abgespeichert und dort zusätzlich mit einer CRC-Prüfsumme abgesichert. Von dem Speicher aus kann das Anwenderprogramm dann auf die Sicherheitssteuerung übertragen werden. Anhand der CRC-Prüfsumme kann eine Verfälschung des Anwenderprogramms beim Übertragen auf die Sicherheitssteuerung erkannt und ggf. verhindert werden.

WO 88/09590 offenbart ein Verfahren zum Überprüfen eines Signals, das über eine Übertragungsleitung übertragen wird, auf Fehler, wobei auch hier eine CRC-Prüfsumme zur Anwendung kommt.

Es ist eine Aufgabe der vorliegenden Erfindung ein Verfahren und eine Vorrichtung der eingangs genannten Art weiterzubilden, um die Flexibilität beim Erstellen eines Anwenderprogramms und somit der Realisierung einer Sicherheitssteuerung weiter zu erhöhen, um somit eine schneller und kostengünstigere Programmierung einer Sicherheitssteuerung zu ermöglichen.

Diese Aufgabe wird durch ein Verfahren und eine Vorrichtung der eingangs genannten Art gelöst, wobei der Quellcode ferner eine Anzahl von Diagnoseanweisungen zum Erzeugen von Diagnosemeldungen, die auf einer Diagnoseanzeigeeinheit angezeigt werden, umfasst, und wobei die Diagnoseanweisungen bei dem Ermitteln der Prüfsumme unberücksichtigt bleiben.

Dem neuen Verfahren und der neuen Vorrichtung liegt die Idee zugrunde, dass beim Ermitteln der Prüfsumme die Diagnoseanweisungen unberücksichtigt bleiben. Die Prüfsumme wird somit lediglich für die Sicherheitssteueranweisungen ermittelt. Somit bleiben auch bei derjenigen Prüfsumme, die im Rahmen der Zulassung durch eine Aufsichtsbehörde ermittelt wird, die Diagnoseanweisungen unberücksichtigt. Somit ist es möglich, nach erfolgter Zulassung Änderungen an den Diagnoseanweisungen vornehmen zu können, ohne dass dies einen Einfluss auf die zum Zwecke der Verifikation zu erstellende Prüfsumme hat. Somit können nach erfolgter Zulassung bzw. Abnahme Ergänzungen an bereits vor der Zulassung vorhandenen Diagnoseanwesisungen vorgenommen werden. Es ist aber auch denkbar, nach erfolgter Zulassung erstmals Diagnoseanweisungen zu erstellen. Dies erhöht die Flexibilität beim Erstellen eines Anwenderprogramms. Da Änderungen an den Diagnoseanweisungen keine erneute Zulassung des Anwenderprogramms durch eine der Aufsichtsbehörden erfordern, reduzieren sich somit der Zeitaufwand und folglich auch die Kosten für das Erstellen eines Anwenderprogramms und somit die Programmierung einer Sicherheitssteuerung.

Die oben genannte Aufgabe ist daher vollständig gelöst.

In einer weiteren Ausgestaltung der Erfindung werden die Diagnoseanweisungen markiert.

Markierte Diagnoseanweisungen können eindeutig erkannt werden. Somit ist sichergestellt, dass die Diagnoseanweisungen beim Ermitteln der Prüfsumme erkannt und deshalb definitiv unberücksichtigt bleiben. Diese Maßnahme bewirkt, dass der erfindungsgemäße Verfahren und die erfindungsgemäße Vorrichtung zuverlässig arbeiten.

Vorzugsweise werden die Diagnosemarkierungen beim Erstellen des Quellcodes durch ein für das Erstellen des Anwenderprogramms verwendete Computerprogramm selbsttätig markiert. Somit muss dies der Programmierer des Anwenderprogramms nicht selbst tun. Diese Maßnahme spart Zeit und somit Kosten. Darüber hinaus garantiert sie eine hohe Zuverlässigkeit des erfindungsgemäßen Verfahren und der erfindungsgemäßen Vorrichtung.

Vorzugsweise erfolgt das Markieren der Diagnoseanweisungen durch Voranstellen und Nachstellen jeweils einer Diagnosemarkierung. Die Diagnoseanweisungen sind somit in zwei Diagnosemarkierungen eingebettet bzw. von diesen umrahmt. Es sind aber auch andere Maßnahmen zur Markeierung der Diagnoseanweisungen denkbar. So kann jede einzelne Diagnoseanweisung beispielsweise durch Einfügen von hierfür vorgesehenen Sonderzeichen markiert werden.

In einer weiteren Ausgestaltung der Erfindung umfasst der Maschinencode einen ersten Sicherheitscode und einen zweiten Sicherheitscode, wobei für jeden der beiden Sicherheitscodes jeweils eine Prüfsumme ermittelt wird.

Diese Maßnahme ermöglicht eine besonders hohe Flexibilität hinsichtlich Änderungen, die eventuell nach erfolgter Zulassung durch eine Aufsichtsbehörde vorgenommen werden. Werden beispielsweise Änderungen vorgenommen, die sich nur auf einen der beiden Kanäle einer Sicherheitssteuerung auswirken, ist nur für denjenigen Umfang des Anwenderprogramms eine erneute Zulassung erforderlich, der diesem Kanal zugeordnet ist.

In einer weiteren Ausgestaltung der Erfindung umfasst der Maschinencode einen ersten Sicherheitscode und einen zweiten Sicherheitscode, wobei beim Erzeugen des ersten Sicherheitscodes die Diagnoseanweisungen berücksichtigt werden und beim Erzeugen des zweiten Sicherheitscodes unberücksichtigt bleiben.

Diese Maßnahme besitzt den Vorteil, dass einer der beiden Kanäle der Sicherheitssteuerung vollkommen frei von Diagnoseanweisungen ist. Somit wirken sich Änderungen an den Diagnoseanweisungen auf diesen Kanal in keinster Weise aus. Somit können weitere Diagnoseanweisungen zu bereits bestehenden Diagnoseanweisungen hinzugefügt werden oder überhaupt erstmals Diagnoseanweisungen erstellt werden, ohne dass dies einen Einfluss auf diesen Kanal hat.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer zu steuernden Anlage;
- Fig. 2: eine schematische Darstellung zur Erläuterung des Erzeugens von Maschinencode und des Ermittelns von Prüfsummen.

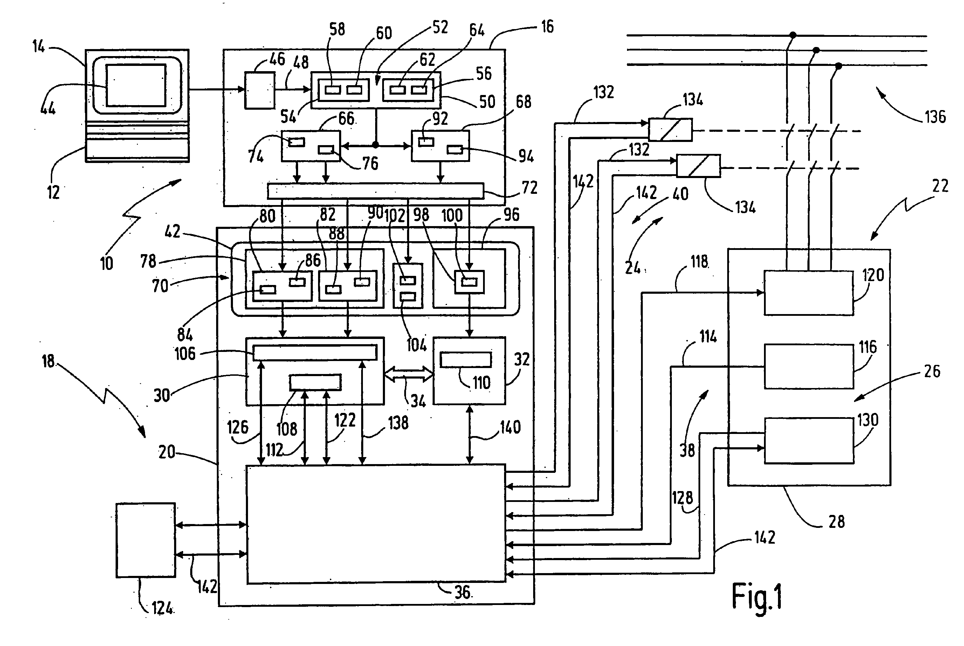

In Fig. 1 ist eine erfindungsgemäße Vorrichtung in ihrer Gesamtheit mit der Bezugsziffer 10 bezeichnet.

Die Vorrichtung 10 beinhaltet einen herkömmlichen Computer 12 mit einer Anzeigeeinheit 14. Auf dem Computer 12 wird ein Computerprogramm 16 ausgeführt. Das Computerprogramm 16 ermöglicht das Erstellen eines Anwenderprogramms für eine Sicherheitssteuerung. Das Computerprogramm 16 wird in der Fachterminologie daher häufig auch als Programmiertool bezeichnet. Der Computer 12 kann als PC und die Anzeigeeinheit 14 kann als Monitor ausgeführt sein.

In Fig. 1 ist eine in ihrer Gesamtheit mit der Bezugsziffer 18 bezeichnete Sicherheitsschaltung dargestellt, die eine Sicherheitssteuerung 20 aufweist, die dazu ausgebildet ist, eine in ihrer Gesamtheit mit der Bezugsziffer 22 bezeichnete automatisierte Anlage zu steuern. Die automatisierte Anlage 22 umfasst eine Vielzahl von Aktuatoren 24 und eine Vielzahl von Sensoren 26. Exemplarisch ist ein in der Anlage 22 enthaltener Verbraucher 28 dargestellt, bei dem es sich beispielsweise um einen Roboter handeln kann.

Die Sicherheitssteuerung 20 ist zweikanalig-redundant aufgebaut, um die erforderliche Fehlersicherheit zum Steuern sicherheitskritischer Prozesse bzw. Anwendungen zu erreichen. Stellvertretend für den zweikanaligen Aufbau sind in Fig. 1 zwei voneinander getrennte Prozessoren, nämlich ein erster Prozessor 30 und ein zweiter Prozessor 32 dargestellt. Die beiden Prozessoren 30,32 stehen über eine bidirektionale Kommunikationsschnittstelle 34 miteinander in Verbindung, um sich gegenseitig kontrollieren und Daten austauschen zu können. Bevorzugt sind die beiden Kanäle der Sicherheitssteuerung 20 und die beiden Prozessoren 30, 32 diversitär, d.h. verschieden voneinander aufgebaut, um systematische Fehler weitgehend auszuschließen.

Mit der Bezugsziffer 36 ist eine Ein-/Ausgabeeinheit bezeichnet, die mit jedem der beiden Prozessoren 30, 32 in Verbindung steht. Die Ein-/Ausgabeeinheit 36 nimmt eine Vielzahl von Steuerungseingangssignalen 38 von der Vielzahl von Sensoren 26 auf und leitet diese in einem angepassten Datenformat an jeden der beiden Prozessoren 30, 32 weiter. Ferner erzeugt die Ein-/ Ausgabeeinheit 36 in Abhängigkeit von den Prozessoren 30, 32 eine Vielzahl von Steuerungsausgangssignalen 40, mit denen die Vielzahl von Aktoren 24 angesteuert werden.

Mit der Bezugsziffer 42 ist ein Programmspeicher bezeichnet, in dem das Anwenderprogramm in Form von Maschinencode abgespeichert wird. Der Maschinencode wird mit Hilfe der Vorrichtung 10 erstellt. Ist der Programmspeicher 42 als Chipkarte ausgebildet, ermöglicht dies einen einfachen Austausch des Maschinencodes und somit des Anwenderprogramms auch ohne direkten Anschluss an den Computer 12. Alternativ kann der Programmspeicher 42 auch als ein in der Sicherheitssteuerung 20 fest eingebauter Speicher, beispielsweise einem EEPROM, ausgebildet sein.

Das Computerprogramm 16 stellt auf der Anzeigeeinheit 14 eine Benutzeroberfläche 44 bereit. Die Benutzeroberfläche 44 ermöglicht einem Programmierer das Erstellen eines Anwenderprogramms. Der Programmierer erstellt das Anwenderprogramm dadurch, dass er dem Computer 12 über eine an diesen angeschlossene Eingabeeinheit Eingaben zuführt. Bei der Eingabeeinheit kann es sich beispielsweise um eine Tastatur oder eine Maus handeln. In Abhängigkeit derjenigen Programmiersprache, die für das Erstellen des Anwenderprogramms verwendet wird, unterscheiden sich die Eingabekonzepte. Wird als Programmiersprache beispielsweise Structured Text oder Instruction List verwendet, so wird das Anwenderprogramm durch textuelle Eingaben erstellt. Wird dagegen Function Block Diagram als Programmiersprache verwendet, so erstellt der Programmierer das Anwenderprogramm dadurch, dass er vordefinierte Programmmodule, die beispielsweise auf der Benutzeroberfläche 44 mittels graphischer Symbole repräsentiert werden, unter Verwendung einer Maus auswählt.

Das Computerprogramm 16 umfasst ein Anzeigemodul 46. Mit dem Anzeigemodul 46 werden die vom Programmierer über die Eingabeeinheit vorgenommenen Eingaben erfasst und ausgewertet. Zum einen erzeugt das Anzeigemodul 46 einen die jeweilige Eingabe repräsentierenden Quellcodeumfang 48, der in einem Quellcodespeicher 50 abgelegt wird. Zum anderen bewirkt das Anzeigemodul 46 das Anzeigen von graphischen Symbolen auf der Benutzeroberfläche 44. Diese graphischen Symbole repräsentieren die vom Programmierer vorgenommenen Eingaben und somit den vom Anzeigemodul 46 erzeugten Quellcodeumfang 48.

Wenn der Programmierer sämtliche für das Anwenderprogramm benötigten Eingaben vorgenommen hat, liegt in dem Quellcodespeicher 50 ein Quellcode 52 vor. Der Quellcode 52 umfasst einen ersten Quellcodeanteil 54 und einen zweiten Quellcodeanteil 56. Der erste Quellcodeanteil 54 repräsentiert Sicherheitsanweisungen, die für die von der Sicherheitssteuerung 20 zu erledigenden Sicherheitsaufgaben erforderlich sind. Bei den Sicherheitsanweisungen handelt es sich um erste Steueranweisungen 58 zum Steuern von Aktuatoren. Für die Bearbeitung der ersten Steueranweisungen 58 werden sicherheitsrelevante Programmvariablen fehlersicher verarbeitet. Die ersten Steueranweisungen können auch als Sicherheitssteueranweisungen bezeichnet werden. Ferner handelt es sich bei den Sicherheitsanweisungen um erste Diagnoseanweisungen 60 zum Erzeugen von Diagnosemeldungen. Die ersten Diagnoseanweisungen können auch als Sicherheitsdiagnoseanweisungen bezeichnet werden. Der zweite Quellcodeanteil 56 repräsentiert Standardanweisungen, die für die von der Sicherheitssteuerung 20 zu erledigenden Standardaufgaben erforderlich sind. Bei den Standardanweisungen handelt es sich um zweite Steueranweisungen 62 zum Steuern von Aktuatoren. Für die Bearbeitung der zweiten Steueranweisungen 62 werden nicht-sicherheitsrelevante Programmvariablen verarbeitet, wobei für die nicht-sicherheitsrelevanten Programmvariablen eine fehlersichere Verarbeitung nicht erforderlich ist. Die zweiten Steueranweisungen können auch als Standardsteueranweisungen bezeichnet werden. Ferner handelt es sich bei den Standardanweisungen um zweite Diagnoseanweisungen 64 zum Erzeugen von Diagnosemeldungen. Die zweiten Diagnoseanweisungen können auch als Standarddiagnoseanweisungen bezeichnet werden.

Aus dem in dem Quellcodespeicher 50 enthaltenen Quellcode 52 wird mittels zweier Compiler 66, 68 ein Maschinencode 70 erzeugt. Der Maschinencode 70 wird über ein Gateway 72 an die Sicherheitssteuerung 20 übertragen und dort in dem Programmspeicher 42 gespeichert. Der Maschinencode 70 wird wie folgt erzeugt:

Der Quellcode 52 wird einem ersten Compiler 66 zugeführt. Der erste Compiler 66 umfasst eine erste Maschinencodeerzeugungseinheit 74 und eine erste Prüfsummenermittlungseinheit 76. Mit der ersten Maschinencodeerzeugungseinheit 74 wird ein erster Maschinencodeanteil 78 erzeugt. Der erste Maschinencodeanteil 78 umfasst einen ersten Sicherheitscode 80 und einen Standardcode 82. Der erste Sicherheitscode 80 wird in Abhängigkeit des ersten Quellcodeanteils 54 erzeugt. Der erste Sicherheitscode 80 umfasst dritte Steueranweisungen 84, sogenannte Sicherheitssteueranweisungen, und dritte Diagnoseanweisungen 86, sogenannte Sicherheitsdiagnoseanweisungen. Bei dem Erzeugen des ersten Sicherheitscodes 80 wird somit der erste Quellcodeanteil 54 vollständig in Maschinencode umgesetzt, d.h. sowohl die ersten Steueranweisungen 58 als auch die ersten Diagnoseanweisungen 60 werden in Maschinencode umgesetzt. Es gilt folgende Zuordnung: Die quellcodeseitig vorliegenden ersten Steueranweisungen 58 entsprechen den maschinencodeseitig vorliegenden dritten Steueranweisungen 84. Die quellcodeseitig vorliegenden ersten Diagnoseanweisungen 60 entsprechen den maschinencodeseitig vorliegenden dritten Diagnoseanweisungen 86.

Der Standardcode 82 wird in Abhängigkeit des zweiten Quellcodeanteils 56 erzeugt. Der Standardcode 82 umfasst vierte Steueranweisungen 88, sogenannte Standardsteueranweisungen, und vierte Diagnoseanweisungen 90, sogenannte Standarddiagnoseanweisungen. Bei dem Erzeugen des Standardcodes 82 wird somit der zweite Quellcodeanteil 56 vollständig in Maschinencode umgesetzt, d.h. sowohl die zweiten Steueranweisurigen 62 als auch die zweiten Diagnoseanweisungen 64 werden in Maschinencode umgesetzt. Es gilt folgende Zuordnung: Die quellcodeseitig vorliegenden zweiten Steueranweisungen 62 entsprechen den maschinencodeseitig vorliegenden vierten Steueranweisungen 88. Die quellcodeseitig vorliegenden zweiten Diagnoseanweisungen 64 entsprechen den maschinencodeseitig vorliegenden vierten Diagnoseanweisungen 90.

Ferner wird der Quellcode 52 einem zweiten Compiler 68 zugeführt. Der zweite Compiler 68 umfasst eine zweite Maschinencodeerzeugungseinheit 92 und eine zweite Prüfsummenermittlungseinheit 94. Mit der zweiten Maschinencodeerzeugungseinheit 92 wird ein zweiter Maschinencodeanteil 96 erzeugt. Der zweite Maschinencodeanteil 96 umfasst einen zweiten Sicherheitscode 98. Der zweite Sicherheitscode 98 wird in Abhängigkeit des ersten Quellcodeanteils 54 erzeugt. Der zweite Quellcodeanteil 56 bleibt unberücksichtigt. Der zweite Sicherheitscode 98 umfasst lediglich fünfte Steueranweisungen 100, sogenannte Sicherheitssteueranweisungen. Der zweite Sicherheitscode 98 umfasst keine Diagnoseanweisungen. Bei dem Erzeugen des zweiten Sicherheitscodes 98 wird somit nicht der vollständige erste Quellcodeanteil 54 in Maschinencode umgesetzt. Es werden lediglich die ersten Sicherheitsanweisungen 58 in Maschinencode umgesetzt. Die ersten Diagnoseanweisungen 60 bleiben unberücksichtigt.

Mit der ersten Prüfsummenermittlungseinheit 76 wird eine erste Prüfsumme 102 für den ersten Sicherheitscode 80 ermittelt. Die erste Prüfsumme 102 wird allerdings lediglich für die in dem ersten Sicherheitscode 80 enthaltenen dritten Steueranweisungen 84 ermittelt. Die in dem ersten Sicherheitscode 80 enthaltenen dritten Diagnoseanweisungen 86 bleiben dabei unberücksichtigt. Die erste Prüfsumme 102 wird ebenfalls über das Gateway 72 an die Sicherheitssteuerung 20 übertragen und in dem Programmspeicher 42 gespeichert. Mit der zweiten Prüfsummenermittlungseinheit 94 wird eine zweite Prüfsumme 104 für den zweiten Sicherheitscode 98 ermittelt. Da der zweite Sicherheitscode 98 keine Diagnoseanweisungen enthält, werden beim Ermitteln der zweiten Prüfsumme 104 lediglich Steueranweisungen, konkret die fünften Steueranweisungen 100, berücksichtigt. Die zweite Prüfsumme 104 wird ebenfalls über das Gateway 72 an die Sicherheitssteuerung 20 übertragen und in dem Programmspeicher 42 gespeichert. Anhand der beiden in der Sicherheitssteuerung 20 gespeicherten und somit hinterlegten Prüfsummen 102, 104 kann jederzeit überprüft werden, ob der sicherheitsrelevante Umfang des von der Sicherheitssteuerung 20 ausgeführten Anwenderprogramms mit demjenigen sicherheitsrelevanten Umfang identische ist, der bei der Zulassung durch eine der Aufsichtsbehörden verifiziert und durch eine seinerzeit ermittelte Prüfsumme versiegelt wurde. Vorzugsweise sind auch die im Rahmen der Zulassung ermittelten Prüfsummen in der Sicherheitssteuerung 20 abgespeichert.

Vorteilhafterweise sind die beiden Maschinencodeerzeugungseinheiten 74, 92 und die beiden Prüfsummenermittlungseinheiten 76, 94 diversitär ausgebildet. Es ist aber auch denkbar, dass die beiden Prüfsummenermittlungseinheiten 76, 94 identisch ausgebildet sind. Ferner ist es denkbar, dass lediglich eine einzige Prüfsummenermittlungseinheit vorgesehen ist. Mit dieser werden dann sowohl für den mit der Maschinencodeerzeugungseinheit 74 erzeugten ersten Sicherheitscode 80 als auch für den mit der Maschinencodeerzeugungseinheit 92 erzeugten zweiten Sicherheitscode 98 jeweils eine Prüfsumme ermittelt.

Insgesamt setzt sich der Maschinencode 70 aus dem ersten Sicherheitscode 80, dem Standardcode 82 und dem zweiten Sicherheitscode 98 zusammen, wobei der erste Sicherheitscode 80 und der Standardcode 82 dem ersten Prozessor 30 zugeordnet sind. Der zweite Sicherheitscode 98 ist dem zweiten Prozessor 32 zugeordnet. Das vom Programmierer erstellte Anwenderprogramm wird insgesamt durch den Quellcode 52 und den Maschinencode 70 repräsentiert.

In Abhängigkeit des Bearbeitungsfortganges des Anwenderprogramms wird in dem ersten Prozessor 30 zum einen eine erste aktuelle Sicherheitsanweisung 106 und zum anderen eine aktuelle Standardanweisung 108 abgearbeitet. Im Wesentlichen zeitgleich wird in dem zweiten Prozessor 32 eine zweite aktuelle Sicherheitsanweisung 110 abgearbeitet. Bei der ersten aktuellen Sicherheitsanweisung 106 kann es sich um eine in den dritten Steueranweisungen 84 enthaltene Sicherheitssteueranweisung oder um eine in den dritten Diagnoseanweisungen 86 enthaltene Sicherheitsdiagnoseanweisung handeln. Bei der aktuellen Standardanweisung 108 kann es sich um eine in den vierten Steueranweisungen 88 enthaltene Standardsteueranweisung oder um eine in den vierten Diagnoseanweisungen 90 enthaltene Standarddiagnoseanweisung handeln. Bei der zweiten aktuellen Sicherheitsanweisung 110 handelt es sich um eine in den fünften Steueranweisungen 100 enthaltene Sicherheitssteueranweisung. Sicherheitssteueranweisungen werden auch als sicherheitsrelevante Steueranweisungen bezeichnet. Standardsteueranweisungen werden auch als nicht-sicherheitsrelevante Steueranweisungen bezeichnet.

Handelt es sich bei der aktuellen Standardanweisung 108 um eine Standardsteueranweisung, so werden erste nicht-sicherheitsrelevante Daten 112 zwischen dem ersten Prozessor 30 und der Ein-/Ausgabeeinheit 36 ausgetauscht. Hierbei werden dem ersten Prozessor 30 Daten unter Verwendung von Programmeingangsvariablen zugeführt, wobei deren Momentanwerte Werte von nicht-sicherheitsrelevanten Steuerungseingangssignalen 114 repräsentieren, die von nicht-sicherheitsrelevanten Sensoren 116 erzeugt werden. Bei den nicht-sicherheitsrelevanten Sensoren 116 handelt es sich um solche Sensoren, die beispielsweise für eine Antriebsregelung benötigte Eingangsgrößen erfassen. Hierbei kann es sich beispielsweise um Drehzahlen, Winkel oder Geschwindigkeiten handeln. Die nicht-sicherheitsrelevanten Sensoren 116 sind nicht-fehlersicher ausgebildet. Der Ein-/Ausgabeeinheit 36 werden Daten unter Verwendung von Programmausgangsvariablen zugeführt, wobei deren Momentanwerte Werte von nicht-sicherheitsrelevanten Steuerungsausgangssignalen 118 repräsentieren, die nicht-sicherheitsrelevanten Aktuatoren 120 zu deren Ansteuerung zugeführt werden. Bei den nicht-sicherheitsrelevanten Aktuatoren 120 kann es sich beispielsweise um Motoren oder Stellzylinder handeln. Die Momentanwerte der nicht-sicherheitsrelevanten Programmausgangsvariablen werden in Abhängigkeit der nicht-sicherheitsrelevanten Programmeingangsvariablen gemäß den Standardsteueranweisungen ermittelt.

Handelt es sich bei der aktuellen Standardanweisung 108 um eine Standarddiagnoseanweisung, so werden zweite nicht-sicherheitsrelevante Daten 122 zwischen dem ersten Prozessor 30 und der Ein-/Ausgabeeinheit 36 ausgetauscht. Beispielsweise werden dem ersten Prozessor 30 ebenfalls die Momentanwerte der nicht-sicherheitsrelevanten Steuerungseingangssignale 114 und/oder die Momentanwerte der nicht-sicherheitsrelevanten Steuerungsausgangssignale 118 zugeführt. In Abhängigkeit der zugeführten Momentanwerte kann dann festgestellt werden, welcher Prozesszustand der zu steuernden Anlage 22 vorliegt. Eine entsprechende Diagnosemeldung wird mittels einer Diagnoseanzeigeeinheit 124 angezeigt.

Handelt es sich bei der ersten aktuellen Sicherheitsanweisung 106 um eine Sicherheitssteueranweisung, so werden erste sicherheitsrelevante Daten 126 zwischen dem ersten Prozessor 30 und der Ein-/Ausgabeeinheit 36 ausgetauscht. Hierbei werden dem ersten Prozessor 30 Daten unter Verwendung von sicherheitsrelevanten Programmeingangsvariablen zugeführt, wobei deren Momentanwerte Werte von sicherheitsrelevanten Steuerungseingangssignalen 128 repräsentieren, die von sicherheitsrelevanten Sensoren 130 erzeugt werden. Bei den sicherheitsrelevanten Sensoren 130 handelt es sich beispielsweise um Not-Aus-Taster, Zwei-Hand-Steuerungen, Schutztüren, Drehzahlüberwachungsgeräte oder andere Sensoren zur Aufnahme sicherheitsrelevanter Parameter. Der Ein-/Ausgabeeinheit 36 werden Daten unter Verwendung von sicherheitsrelevanten Programmausgangsvariablen zugeführt, wobei deren Momentanwerte Werte von sicherheitsrelevanten Steuerungsausgangssignalen 132 repräsentieren, die sicherheitsrelevanten Aktuatoren 134 zu deren Ansteuerung zugeführt werden. Bei den sicherheitsrelevanten Aktuatoren 134 handelt es sich beispielsweise um sogenannte Schütze, deren Arbeitskontakte in der Verbindung zwischen einer Stromversorgung 136 und dem Verbraucher 28 angeordnet sind. Über die sicherheitsrelevanten Aktuatoren 134 kann die Stromversorgung 136 des Verbrauchers 28 abgeschaltet werden, wodurch es möglich ist, bei Auftritt einer entsprechenden Fehlfunktion zumindest den Verbraucher 28 in einen sicheren Zustand zu überführen. Die Momentanwerte der sicherheitsrelevanten Programmausgangsvariablen werden in Abhängigkeit der sicherheitsrelevanten Programmeingangsvariablen gemäß den Sicherheitssteueranweisungen ermittelt.

Handelt es sich bei der ersten aktuellen Sicherheitsanweisung 106 um eine Sicherheitsdiagnoseanweisung, so werden zweite sicherheitsrelevante Daten 138 zwischen dem ersten Prozessor 30 und der Ein-/Ausgabeeinheit 36 ausgetauscht. Beispielsweise werden dem ersten Prozessor 30 ebenfalls die Momentanwerte der sicherheitsrelevanten Steuerungseingangssignale 128 und/oder die Momentanwerte der sicherheitsrelevanten Steuerungsausgangssignale 132 zugeführt. In Abhängigkeit der zugeführten Momentanwerte kann dann festgestellt werden, welcher Prozesszustand der zu steuernden Anlage 22 vorliegt. Eine entsprechende Diagnosemeldung wird mittels einer Diagnoseanzeigeeinheit 124 angezeigt.

Bei der zweiten aktuellen Sicherheitsanweisung 110 handelt es sich um eine Sicherheitssteueranweisung, bei der entsprechend der im ersten Prozessor 30 abgearbeiteten ersten aktuellen Sicherheitsanweisung 106 verfahren wird. Bezüglich der zweiten aktuellen Sicherheitsanweisung 110 werden dritte sicherheitsrelevante Daten 140, die den ersten sicherheitsrelevanten Daten 126 entsprechen, verwendet.

Die vorstehenden Ausführungen, gemäß denen sowohl vom ersten Prozessor 30 als auch vom zweiten Prozessor 32 Werte für die sicherheitsrelevanten Steuerungsausgangssignale 132 erzeugt werden, bedeuten nicht, dass die von diesen beiden Prozessoren 30, 32 erzeugten Werte gleichzeitig als Steuerungsausgangssignale 132 ausgegeben werden. Die vorstehenden Ausführungen sollen lediglich den bezüglich der zu erledigenden Sicherheitsaufgaben redundanten Aufbau der Sicherheitssteuerung 20 wiedergeben. Beide Prozessoren 30, 32 sind dazu ausgebildet, Werte für die Steuerungsausgangssignale 132 zu ermitteln. Während des fehlerfreien Betriebs der Sicherheitssteuerung 20 werden lediglich die von einem Prozessor, beispielsweise dem ersten Prozessor 30, ermittelten Werte als Steuerungsausgangssignale 132 ausgegeben.

Über die Ein-/Ausgabeeinheit 36 werden zwischen der Sicherheitssteuerung 20 und den sicherheitsrelevanten Sensoren 130, den sicherheitsrelevanten Aktuatoren 134 und der Diagnoseanzeigeeinheit 124 Testsignale 142 ausgetauscht. Mit Hilfe der Testsignale 142 kann in der Sicherheitssteuerung 20 festgestellt werden, ob die an sie angeschlossenen Komponenten fehlerfrei arbeiten, was erforderlich ist, da ein sicherer Zustand der zu steuernden Anlage 22 gewährleistet sein muss, sobald an einem mit der Sicherheitssteuerung 20 verbundenen Gerät eine Fehlfunktion auftritt.

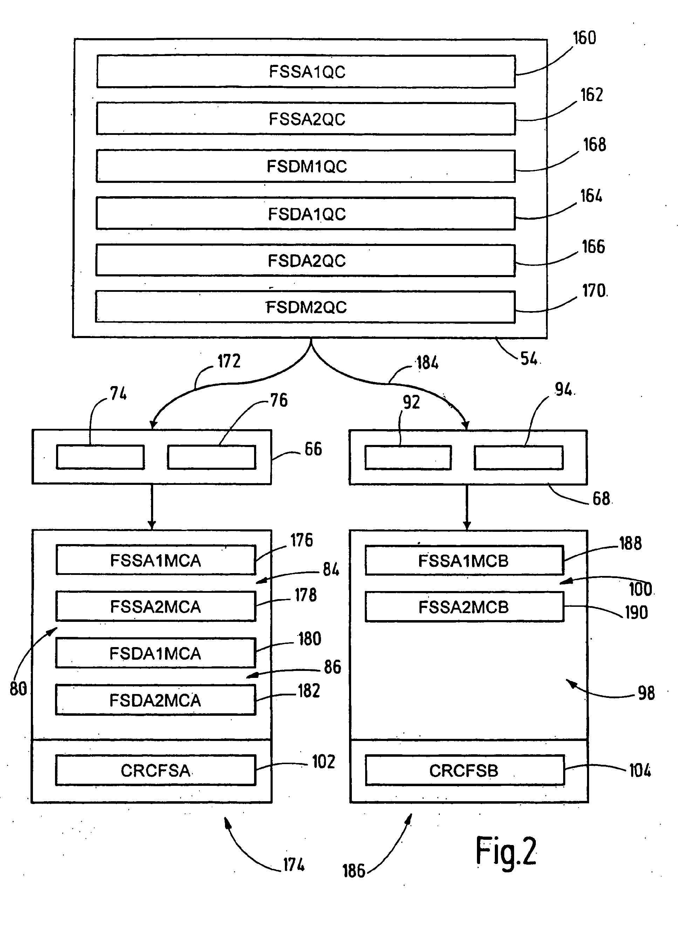

In Fig. 2 ist die Vorgehensweise für das Erzeugen eines Maschinencodes in Abhängigkeit eines Quellcodes dargestellt, wobei lediglich der erste Quellcodeanteil 54 und somit der sicherheitsrelevante Umfang des Quellcodes und somit des Anwenderprogramms betrachtet wird.

Der erste Quellcodeanteil 54 umfasst eine mit der Bezugsziffer 160 bezeichnete erste Sicherheitssteueranweisung FSSA1QC. Die verwendete Nomenklatur hat dabei folgende Bedeutung: FS steht für "fail-safe" und zeigt somit an, dass es sich um eine sicherheitsrelevante Steueranweisung handelt. SA steht allgemein für "Steueranweisung". Durch Nachstellen der Ziffer 1 ergibt sich die Kennzeichnung der Sicherheitssteueranweisung, anhand der diese in einer Vielzahl von Sicherheitssteueranweisungen identifiziert werden kann. QC zeigt an, dass es sich um eine quellcodeseitige Sicherheitssteueranweisung handelt. Diese Nomenklatur wird in Fig. 2 einheitlich verwendet.

Mit der Bezugsziffer 162 ist eine zweite Sicherheitssteueranweisung FSSA2QC bezeichnet. Die beiden Sicherheitssteueranweisungen FSSA1QC und FSSA2QC sind in den ersten Steueranweisungen 58 enthalten. Mit den Bezugsziffern 164, 166 sind eine erste Sicherheitsdiagnoseanweisung FSDA1QC und eine zweite Sicherheitsdiagnoseanweisung FSDA2QC bezeichnet. DA steht dabei allgemein für "Diagnoseanweisung". Durch Nachstellen beispielsweise der Ziffer 1 ergibt sich eine Kennzeichnung, anhand der eine Sicherheitsdiagnoseanweisung in einer Vielzahl von Sicherheitsdiagnoseanweisungen identifiziert werden kann.

Die beiden Sicherheitsdiagnoseanweisungen FSDA1QC und FSDA2QC sind von einer mit der Bezugsziffer 168 bezeichneten ersten Diagnosemarkierung FSDM1QC und einer mit der Bezugsziffer 170 bezeichneten zweiten Diagnosemarkierung FSDM2QC umgeben bzw. eingerahmt bzw. von diesen eingeschlossen. DM steht dabei allgemein für "Diagnosemarkierung". Durch Nachtstellen beispielsweise der Ziffer 1 ergibt sich eine Kennzeichnung, anhand der eine Diagnosemarkierung identifiziert werden kann. Anhand der beiden Diagnosemarkierungen FSDM1QC und FSDM2QC können beim Vorgang des Kompilierens Sicherheitsdiagnoseanweisungen erkannt werden, die in dem ersten Quellcodeanteil 54 enthalten sind. Die beiden Sicherheitsdiagnoseanweisungen FSDA1QC und FSDA2QC sowie die beiden Diagnosemarkierungen FSDM1QC und FSDM2QC sind in den ersten Diagnoseanweisungen 60 enthalten.

Der erste Quellcodeanteil 54 wird dem ersten Compiler 66 zugeführt, was durch einen Pfeil 172 angedeutet ist. Mit dem ersten Compiler 66 werden erste Kanaldaten 174 erzeugt. Die ersten Kanaldaten 174 sind demjenigen Kanal zugeordnet, in dem der erste Prozessor 30 enthalten ist. Mit der ersten Maschinencodeerzeugungseinheit 74 wird ein erster Sicherheitscode 80 erzeugt, der dritte Steueranweisungen 84 umfasst. Bei den dritten Steueranweisungen 84 handelt es sich um eine mit der Bezugsziffer 176 bezeichnete dritte Sicherheitssteueranweisung FSSA1MCA und eine mit der Bezugsziffer 178 bezeichnete vierte Sicherheitssteueranweisung FSSA2MCA. MC zeigt an, dass es sich um eine maschinencodeseitige Sicherheitssteueranweisungen handelt. Der Buchstabe A zeigt an, dass diese Sicherheitssteueranweisungen dem ersten Prozessor 30 und somit dem Kanal A zugewiesen sind. Zwischen den quellcodeseitigen Sicherheitssteueranweisungen und den maschinencodeseitigen Sicherheitssteueranweisungen gilt folgende Zuordnung: Die maschinencodeseitige dritte Sicherheitssteueranweisung FSSA1MCA ist der quellcodeseitigen ersten Sicherheitssteueranweisung FSSA1QC zugeordnet. Die maschinencodeseitige vierte Sicherheitssteueranweisung FSSA2MCA ist der quellcodeseitigen zweiten Sicherheitssteueranweisung FSSA2QC zugeordnet.

Der erste Sicherheitscode 80 umfasst ferner dritte Diagnoseanweisungen 86. Bei den dritten Diagnoseanweisungen 86 handelt es sich um eine mit der Bezugsziffer 180 bezeichnete dritte Sicherheitsdiagnoseanweisung FSDA1MCA und um eine mit der Bezugsziffer 182 bezeichnete vierte Sicherheitsdiagnoseanweisung FSDA2MCA. Zwischen den quellcodeseitigen Sicherheitsdiagnoseanweisungen und den maschinencodeseitigen Sicherheitsdiagnoseanweisungen gilt folgende Zuordnung: Die maschinencodeseitige dritte Sicherheitsdiagnoseanweisung FSDA1MCA ist der quellcodeseitigen ersten Sicherheitsdiagnoseanweisung FSDA1QC zugeordnet. Die maschinencodeseitige vierte Sicherheitsdiagnoseanweisung FSDA2MCA ist der quellcodeseitigen zweiten Sicherheitsdiagnoseanweisung FSDA2QC zugeordnet.

Mit der ersten Prüfsummenermittlungseinheit 76 wird eine mit der Bezugsziffer 102 bezeichnete erste Prüfsumme CRCFSA für den ersten Sicherheitscode 80 ermittelt. Die Buchstaben CRC (cyclic reduncancy check) deuten an, dass besagte Prüfsummenermittlung nach einem CRC-Verfahren erfolgt. Beim Erstellen der ersten Prüfsumme CRCFSA werden lediglich die in dem ersten Sicherheitscode 80 enthaltenen Sicherheitssteueranweisungen, namentlich die beiden Sicherheitssteueranweisungen FSSA1MCA und FSSA2MCA berücksichtigt. Die in dem ersten Sicherheitscode 80 enthaltenen Sicherheitsdiagnoseanweisungen, namentlich die beiden Sicherheitsdiagnoseanweisungen FSDA1MCA und FSDA2MCA bleiben unberücksichtigt.

Die erste Prüfsummenermittlungseinheit 76 ist also so ausgebildet, dass die in dem ersten Quellcodeanteil 54 enthaltenen Sicherheitsdiagnoseanweisungen beim Ermitteln der ersten Prüfsumme CRCFSA unberücksichtigt bleiben. Hierzu erkennt die erste Prüfsummenermittlungseinheit 76 die in dem ersten Quellcodeanteil 54 enthaltenen Diagnosemarkierungen. Durch die beiden Diagnosemarkierungen FSDM1QC und FSDM2QC ist für die erste Prüfsummenermittlungseinheit 76 festgelegt, dass die zwischen diesen beiden Diagnosemarkierungen angeordneten Sicherheitsanweisungen beim Erstellen der ersten Prüfsumme CRCFSA nicht zu berücksichtigen sind.

Der erste Quellcodeanteil 54 wird ferner dem zweiten Compiler 68 zugeführt, was durch einen Pfeil 184 angedeutet ist. Mit dem zweiten Compiler 68 werden zweite Kanaldaten 186 erzeugt. Die zweiten Kanaldaten 186 sind für denjenigen Kanal bestimmt sind, in dem der zweite Prozessor 32 enthalten ist. Mit der zweiten Maschinencodeerzeugungseihheit 92 wird ein zweiter Sicherheitscode 98 erzeugt. Der zweite Sicherheitscode 98 umfasst fünfte Steueranweisungen 100. Bei den fünften Steueranweisungen 100 handelt es sich um eine mit der Bezugsziffer 188 bezeichnete fünfte Sicherheitssteueranweisung FSSA1MCB und eine mit der Bezugsziffer 190 bezeichnete sechste Sicherheitssteueranweisung FSSA2MCB. Der Buchstabe B zeigt an, dass diese Sicherheitssteueranweisungen dem zweiten Prozessor 32 und somit dem Kanal B zugewiesen sind. Dabei gilt folgende Zuordnung zwischen den quellcodeseitigen Sicherheitssteueranweisungen und den maschinencodeseitigen Sicherheitssteueranweisungen: Die maschinencodeseitige fünfte Sicherheitssteueranweisung FSSA1MCB ist der quellcodeseitigen ersten Sicherheitssteueranweisung FSSA1QC zugeordnet. Die maschinencodeseitige sechste Sicherheitssteueranweisung FSSA2MCB ist der quellcodeseitigen zweiten Sicherheitssteueranweisung FSSA2QC zugeordnet.

Die zweite Maschinencodeerzeugungseinheit 92 ist dabei so ausgebildet, dass die in dem ersten Quellcodeanteil 54 enthaltenen Sicherheitsdiagnoseanweisungen, namentlich die beiden Sicherheitsdiagnoseanweisungen FSDA1QC und FSDA2QC unberücksichtigt bleiben. Hierzu erkennt die zweite Maschinencodeerzeugungseinheit 92 die in dem ersten Quellcodeanteil enthaltenen Diagnosemarkierungen, namentlich beiden Diagnosemarkierungen FSDM1QC und FSDM2GC. Durch die beiden Diagnosemarkierungen FSDM1QC und FSDM2GC ist für die zweite Maschinencodeerzeugungseinheit 92 festgelegt, dass die zwischen diesen beiden Diagnosemarkierungen angeordneten Sicherheitsanweisungen beim Erstellen des ersten Sicherheitscodes 98 nicht zu berücksichtigen sind. Die beiden Diagnosemarkierungen kennzeichnen die zwischen ihnen angeordneten Sicherheitsanweisungen als Sicherheitsdiagnoseanweisungen.

Mit der zweiten Prüfsummenermittlungseinheit 94 wird eine mit der Bezugsziffer 104 bezeichnete zweite Prüfsumme CRCFSB für den zweiten Sicherheitscode 98 ermittelt. Da der zweite Sicherheitscode 98 lediglich Sicherheitssteueranweisungen enthält, werden beim Ermitteln der zweiten Prüfsumme CRCFSB keine Sicherheitsdiagnoseanweisungen berücksichtigt.

Dadurch dass die beiden maschinencodeseitigen Sicherheitsdiagnoseanweisungen FSDA1MCA und FSDA2MCA beim Ermitteln der ersten Prüfsumme CRCFSA unberücksichtigt bleiben, bleiben somit auch die beiden quellcodeseitigen Sicherheitsdiagnoseanweisungen FSDA1QC und FSDA2QC hierbei unberücksichtigt.

## Patentansprüche

1. Verfahren zum Erstellen eines Anwenderprogramms für eine Sicherheitssteuerung (20), die dazu ausgebildet ist, eine automatisierte Anlage (22) mit einer Vielzahl von Sensoren (26) und einer Vielzahl von Aktuatoren (24) zu steuern, wobei die Sicherheitssteuerung (20) einen ersten Prozessor (30) und einen zweiten Prozessor (32) aufweist, mit folgenden Schritten:
- Erstellen eines Quellcodes (52) für ein Anwenderprogramm, wobei der Quellcode (52) eine Anzahl von Steueranweisungen (160, 162) zum Steuern der Aktuatoren (24) umfasst, und wobei zur Bearbeitung der Steueranweisungen (160, 162) sicherheitsrelevante Programmvariablen mit Hilfe des ersten und zweiten Prozessors (30 32) fehlersicher verarbeitet werden,
- Erzeugen eines Maschinencodes (70) in Abhängigkeit des Quellcodes (52), und
- Ermitteln zumindest einer Prüfsumme (102, 104), für zumindest einen Teil des Maschinencodes (80, 98),
**dadurch gekennzeichnet, dass** der Quellcode (52) ferner eine Anzahl von Diagnoseanweisungen (164, 166) zum Erzeugen von Diagnosemeldungen umfasst, die auf einer Diagnoseanzeigeeinheit (124) angezeigt werden, wobei bei dem Ermitteln der Prüfsumme (102, 104) die Diagnoseanweisungen (164, 166) unberücksichtigt bleiben.

2. Verfahren nach Anspruch 1, **dadurch gekennzeichnet, dass** die Diagnoseanweisungen (164, 166) im Quellcode (52) markiert werden.

3. Verfahren nach einem der vorstehenden Ansprüche, **dadurch gekennzeichnet, dass** der Maschinencode (70) einen ersten Sicherheitscode (80) und einen zweiten Sicherheitscode (98) umfasst, wobei für jeden der beiden Sicherheitscodes (80, 98) jeweils eine Prüfsumme (102, 104) ermittelt wird.

4. Verfahren nach einem der vorstehenden Ansprüche, **dadurch gekennzeichnet, dass** der Maschinencode (70) einen ersten Sicherheitscode (80) und einen zweiten Sicherheitscode (98) umfasst, wobei beim Erzeugen des ersten Sicherheitscodes (80) die Diagnoseanweisungen (164, 166) berücksichtigt werden und beim Erzeugen des zweiten Sicherheitscodes (98) unberücksichtigt bleiben.

5. Vorrichtung zum Erstellen eines Anwenderprogramms für eine Sicherheitssteuerung (20), die dazu ausgebildet ist, eine automatisierte Anlage (22) mit einer Vielzahl von Sensoren (26) und einer Vielzahl von Aktuatoren (24) zu steuern, wobei die Sicherheitssteuerung (20) einen ersten Prozessor (30) und einen zweiten Prozessor (32) aufweist,
mit Einheiten (12, 14, 16) zum Erstellen eines Quellcodes (52) für ein Anwenderprogramm, wobei der Quellcode (52) eine Anzahl von Steueranweisungen (160, 162) zum Steuern der Aktuatoren (24) umfasst, und wobei zur Bearbeitung der Steueranweisungen (160, 162) sicherheitsrelevante Programmvariablen mit Hilfe des ersten und zweiten Prozessors (30, 32) fehlersicher verarbeitet werden,
mit Einheiten (74, 92) zum Erzeugen eines Maschinencodes (70) in Abhängigkeit des Quellcodes (52), und
mit Einheiten (76, 94) zum Ermitteln zumindest einer Prüfsumme (102, 104) für zumindest einen Teil des Maschinencodes (80, 98),
**dadurch gekennzeichnet, dass** der Quellcode (52) ferner eine Anzahl von Diagnoseanweisungen (164, 166) zum Erzeugen von Diagnosemeldungen umfasst, die auf einer Diagnoseanzeigeeinheit (124) angezeigt werden, wobei bei dem Ermitteln der Prüfsumme (102, 104) die Diagnoseanweisungen (164, 166) unberücksichtigt bleiben.

6. Computerprogramm mit Programmcodemitteln zum Durchführen eines Verfahrens nach einem der Ansprüche 1 bis 4, wenn das Computerprogramm (16) auf einem Computer (12) ausgeführt wird.

## Claims

1. A method for generating a user program for a safety controller (20) which is designed to control an automated installation (22) having a plurality of sensors (26) and a plurality of actuators (24), wherein the safety controller (20) comprises a first processor (30) and second processor (32), the method comprising the steps of
- generating a source code (52) for a user program, wherein the source code (52) comprises a number of control instructions (160, 162) for controlling the actuators (24), and wherein safety-related program variables are processed with the help of the first processor (30) and the second processor (32) in failsafe fashion during execution of the control instructions (160, 162),
- generating a machine code (70) on the basis of the source code (52), and
- determining at least one checksum (102, 104) for at least some of the machine code (80, 98),
**characterized in that** the source code (52) is further comprising a number of diagnosis instructions (164, 166) for producing diagnosis reports which are displayed on a diagnosis display unit (124), wherein the diagnosis instructions (164, 166) are ignored for the determination of the checksum (102, 104).

2. The method of claim 1, **characterized in that** the diagnosis instructions (164, 166) are marked in the source code (52).

3. The method of one of the preceding claims, **characterized in that** the machine code (70) comprises a first safety code (80) and a second safety code (98), wherein a respective checksum (102, 104) is determined for each of the two safety codes (80, 98).

4. The method of one of the preceding claims, **characterized in that** the machine code (70) comprises a first safety code (80) and a second safety code (98), wherein the determination of the first safety code (80) includes the diagnosis instructions (164, 166) and wherein the determination of the second safety code (98) ignores said diagnosis instructions (164, 166).

5. An apparatus for generating a user program for a safety controller (20) which is designed to control an automated installation (22) having a plurality of sensors (26) and a plurality of actuators (24), wherein the safety controller (20) comprises a first processor (30) and second processor (32), the apparatus comprising
units (12, 14, 16) for generating a source code (52) for a user program, wherein the source code (52) comprises a number of control instructions (160, 162) for controlling the actuators (24), and wherein safety-related program variables are processed with the help of the first processor (30) and the second processor (32) in failsafe fashion during execution of the control instructions (160, 162),
units (74, 92) for generating a machine code (70) on the basis of the source code (52), and
units (76, 94) for determining at least one checksum (102, 104) for at least some of the machine code (80, 98),
**characterized in that** the source code (52) is further comprising a number of diagnosis instructions (164, 166) for producing diagnosis reports which are displayed on a diagnosis display unit (124), wherein the determination of the checksum (102, 104) ignores the diagnosis instructions (164, 166).

6. A computer program having program code means for carrying out a method of one of claims 1 to 4 when the computer program (16) is executed on a computer (12).

## Revendications

1. Procédé d'élaboration d'un programme utilisateur pour une commande de sécurité (20), conçue pour commander une installation automatisée (22) avec une multitude de capteurs (26) et une multitude d'actionneurs (24), la commande de sécurité (20) comportant un premier processeur (30) et un deuxième processeur (32) avec les étapes suivantes :
- élaboration d'un code source (52) pour un programme utilisateur, le code source (52) comportant un certain nombre d'instructions de commande (160, 162) pour la commande des actionneurs (24), et des variables de programme concernant la sécurité étant traitées en mode protégée contre les erreurs pour le traitement des instructions de commande (160, 162) à l'aide du premier et du deuxième processeur (30, 32),
- génération d'un code machine (70) en fonction du code source (52), et
- détermination d'au moins une somme de contrôle (102, 104) pour au moins une partie du code machine (80, 98),
**caractérisé en ce que** le code source (52) comporte de plus un certain nombre d'instructions de diagnostic (164, 166) pour la génération de messages de diagnostic, qui sont affichés sur une unité d'affichage de diagnostics (124), les instructions de diagnostic (164, 166) demeurant non considérées lors de la détermination de la somme de contrôle (102, 104).

2. Procédé selon la revendication 1, **caractérisé en ce que** les instructions de diagnostic (164, 166) sont marquées dans le code source (52).

3. Procédé selon une des revendications précédentes, **caractérisé en ce que** le code machine (70) comporte un premier code de sécurité (80) et un deuxième code de sécurité (98), une somme de contrôle (102, 104) étant respectivement déterminée pour chacun des deux codes de sécurité (80, 98).

4. Procédé selon une des revendications précédentes, **caractérisé en ce que** le code machine (70) comporte un premier code de sécurité (80) et un deuxième code de sécurité (98), les instructions de diagnostic (164, 166) étant considérées lors de la génération du premier code de sécurité (80) et demeurant non considérées lors de la génération du deuxième code de sécurité (98).

5. Dispositif d'élaboration d'un programme utilisateur pour une commande de sécurité (20), conçue pour commander une installation automatisée (22) avec une multitude de capteurs (26) et une multitude d'actionneurs (24), la commande de sécurité (20) comportant un premier processeur (30) et un deuxième processeur (32),
avec des unités (12, 14, 16) pour l'élaboration d'un code source (52) pour un programme utilisateur, le code source (52) comportant un certain nombre d'instructions de commande (160, 162) pour la commande des actionneurs (24), et des variables de programme concernant la sécurité étant traitées en mode protégé contre les erreurs pour le traitement des instructions de commande (160, 162) à l'aide du premier et du deuxième processeur (30, 32),
avec les unités (74, 92) pour la génération d'un code machine (70) en fonction du code source (52), et
avec les unités (76, 94) pour la détermination d'au moins une somme de contrôle (102, 104) pour au moins une partie du code machine (80, 98),
**caractérisé en ce que** le code source (52) comporte de plus un certain nombre d'instructions de diagnostic (164, 166) pour la génération de messages de diagnostic, qui sont affichés sur une unité d'affichage de diagnostics (124), les instructions de diagnostic (164, 166) demeurant non considérées lors de la détermination de la somme de contrôle (102, 104).

6. Programme d'ordinateur avec des moyens de code de programme pour l'exécution d'un procédé selon une des revendications 1 à 4, lorsque le programme d'ordinateur (16) est exécuté sur un ordinateur (12).
